# EUROPEAN PATENT SPECIFICATION

(11) **EP 2 124 538 B1**
(45) Date of publication and mention of the grant of the patent: **09.04.2014**
(21) Application number: 08706929.0
(22) Date of filing: 29.02.2008
(51) Int. Cl.: A01M 21/04

(54) **THERMAL WEED CONTROL**
UNKRAUTBEKÄMPFUNG MITTELS HITZE
DÉSHERBAGE THERMIQUE

(30) Priority: 05.03.2007 DK 200700330
(43) Date of publication of application: 02.12.2009
(73) Proprietor: Envo-Dan ApS, 6600 Vejen (DK)
(72) Inventor: JENSEN, Ole Bo, DK-6600 Vejen (DK)
(74) Representative: Gregersen, Niels Henrik
(86) International application number: PCT/DK2008/000087
(87) International publication number: WO 2008/106970

(56) References cited:
- WO-A-00/47043
- WO-A-94/01723
- DE-A1- 4 421 416
- US-A- 5 682 707

## Description

### Field of the Invention

The invention concerns a weed control apparatus and a method intended for thermal weed control, wherein the weed control apparatus is provided with heating means, e.g. via combustion of a combustible gas or liquid in an area which is substantially separated from the surroundings by a screen at the sides and upwards, where the apparatus is intended for moving in a direction across a surface.

### Background of the Invention

In order to avoid using chemicals for weed control, it is known to control unwanted growth by thermal action, for example by using a gas burner for heating the weed. By subjecting the weed to a suitable heat exposure for one second, the leaf cells of the plant are destroyed and the plant dehydrates and dies. Thermal weed control has the side effect that unwanted bacteria, fungus, snails and the germination ability of weed seeds are combated.

Thermal weed control may i.a. be applied in connection with agricultural and horticultural crops and on all other areas as well where plant growth is unwanted.

Until now, thermal weed control would have to be performed primarily under weather conditions without too much wind, as the wind may blow the heat away from the heat exposure area. Furthermore, one had to be very attentive to the fire hazard and to avoid thermal weed control in periods with dry weather conditions, as direct flame action on the weed by means of a weed burner has been used the most.

By this method, these weather conditions have meant a relatively limited time interval in which the thermal weed control could take place, thus implying a rather unpredictable and inflexible task in planning for the person performing the weed control.

In order to reduce the fire risk, it was also required to bring water or foam for subsequent quenching the flame-treated areas. Carried water or foam add extra weight for transport and added work effort for filling.

The direct flame action has been attempted avoided in WO 97/03557 by disposing the burner nozzle and the flame zone outside a heat exposure area located in a heating box. However, the external disposition of the heat supply causes a waste of heat and the risk of not attaining the desired temperature in the heat exposure area. In WO 97/03557, this has been attempted counteracted by letting a fan recycle the secondary air from the heat exposure area by blowing it through a heat exchanger which is supplied with heat from the first secondary air occurring immediately after the flame zone. This, however, only implies an extra resource demanding feature in the apparatus without substantial effect as the overpressure produced thereby in the heating box causes the heat to be blown out.

It is prior art to provide the possibility of getting close to rows of crops with the thermal weed control, e.g. by screening the combustion area from the plant crops, and by providing by various means for following the plant rows.

The sides and top of the screening has often been made of solid iron plate and with fire resistant insulation layer for reducing the heat radiation to the surroundings and to keep the supplied heat in the heat exposure area for a longer time. The front and rear ends of the screen are often made of a movable material in order get as close to the earth surface as possible, e.g. via a suspended chain curtain, which, however has been unable to protect the heat exposure area against wind action.

The driving speed of the mobile unit on which the weed burner is mounted is typically 1 - 10 km/h, as the speed is adapted so as to achieve the heat exposure required by experience for the entire amount of weed to be combated. The possibility of increased driving speed will reduce the total time of work for the task of weed control and will make it easier fit among other chores.

By thermal weed control based on gas combustion, the gas used for the burner will typically be propane or butane. Combustion gas typically consists of 90% propane and 10% butane. The combustible gas is subjected to pressure in a container, where the pressure is typically 6.5 bar, making the gas liquid. During the work with thermal weed control, the gas is carried either in small refillable container or the gas is drawn from a larger stationary container into a portable container. The liquid combustion gas is powered by the pressure difference between container and ambient surroundings through a tube to one or more burner nozzles, where the gas is transformed to gaseous state immediately before these nozzles and is burned off outside the nozzles.

The burner nozzles may have different shapes, such as round or elongated. The round nozzles used presently have a relatively high noise level. A reduced noise load is to be preferred with regard to the persons that are to perform the weed control.

There are various methods for providing that all gas is transformed to gaseous state before being introduced to the combustion outside the nozzle, and one example of this is to conduct the gas through a helical tube around a round nozzle, thus heating the gas.

It is prior art to supply primary and secondary air to the gas combustion in order to optimise the combustion. By primary air is meant air supplied to the gas before it is introduced to the flame zone, and by secondary air is meant air supplied to the heating area right after the flame zone.

By other heating methods, secondary air is defined as air supplied to the heating area from other places than the heating unit itself.

Reducing the resource consumption for heating in the weed control apparatus will imply better profitability for the thermal weed control - for example, lesser gas consumption in relation to heat exposed area will mean reduced transport to and from the gas filling point - as well as the expense of the heating resource will be reduced. The profitability will thus be increased, also compared with the other prior art forms of weed control, e.g. chemical and mechanical.

Document DE 44 21416 A1 discloses a weed control apparatus according to the preamble of independent claim 1.

### Object of the Invention

The purpose of the invention is to achieve a resource-saving method for thermal weed control, including to provide the possibility of performing the thermal weed control under more weather conditions, such as windy weather conditions and in periods of time with dry weather.

### Description of the Invention

The invention concerns a weed control apparatus according to independent claim 1 and a method for thermal weed control according to independent claim 9. Preferred embodiments are set out in the dependent claims.

The preheating of the secondary air with heat from the heat exposure area firstly contributes to recycling of the heat that otherwise would radiate off the top side of the apparatus.

Secondly, the preheating of the secondary air, which includes combustion gas or liquid, provides enhanced efficiency to heating means, as the amount of heat supplied .via the secondary air reduces the need for combusting gas or liquid while simultaneously contributing to a more complete combustion.

By experiments it has appeared that a weed burner of this type is 30-50% more efficient in combating dicotyledonous weeds than a weed burner without secondary air supply at all. Such a resource saving will contribute to enhance profitability of the thermal weed control, and the emission of CO₂ from the combustion process to the ambient environment will be reduced as well.

The supply of the secondary air should be distributed evenly in the heating area in order not to give rise to incomplete combustion or to cause that the flame is blown out.

This may be achieved in that the air is distributed by ducts conducting even amounts of air to discharge apertures which are evenly distributed around the burner nozzle.

A variant of the invention includes that the supplied secondary air is any kind of non-combustible gas, including in particular oxygen (O₂) which enhances almost all combustion processes.

If gas is used for heating of the apparatus, oxygen (O₂) contributes to improved combustion of the 90% propane (C₃H₈) and 10% butane (C₄H₁₀), as the remaining flue gases will be carbon dioxide (CO₂) and water (H₂O) in a complete combustion.

### Example

Combustion of propane: C₃H₈ + 5O₂ → 3CO₂ + 4H₂O
Combustion of butane: 2C₄H₁₀ + 13O₂ → 8CO₂ + 10H₂O

In order not to carry a container with a certain gas, atmospheric air is preferred as secondary air. Atmospheric air usually contains about 21 % oxygen.

The apparatus may include means for feeding particles to the supplied secondary air (12) with a particle size that may be carried with the air flow in the secondary air (12), where the particles are any kind of solid or liquid, preferably combustible particles, e.g. coal dust, sawdust or atomised rape oil.

The means for this supply of secondary heating resources include a storage module which communicates with the secondary air flow, so that the particles are evenly distributed in the airflow and by this be carried to the heating area.

By supplying secondary heating resources, the need for resources from the primary heating means may thereby be reduced so that e.g. the fossil fuels propane and butane may be saved by adding CO₂-neutral types of energy, as drop-formed or atomised rape oil or sawdust. Alternatively, coal dust may also be used.

Since there is no dependence on the presence of the resource addition during the entire work with weed control at a given area, all things being equal there will be achieved a longer period of time for the work before new supplies are to be fetched for the primary heating, e.g. by filling of gas.

By the solution, a more CO₂-neutral thermal weed control may also be achieved.

The supply of secondary air occurs via at least one ventilator and preferably via several ventilators.

In the preferred embodiment, the supply of secondary air will be effected via a plurality of ventilators drawing atmospheric air down into the preheating area in such a way that the air is distributed in the best possible way before being introduced to the heating area.

The at least one ventilator is driven electrically or mechanically, including pneumatically or hydraulically.

In the preferred embodiment, the ventilators are driven electrically, as this presently provides the most simple design with regard to acquisition of components and price. A further development could be taking the energy for driving the ventilators from the gas movement between pressure container and nozzle by various means, or in other ways recycle the existing energy and possible waste heat from the use of the apparatus.

The supply of secondary air may also be effected via supply of pressurised air, e.g. from a compressor or a pressurised air container, including by injection of pressurised air by venturi action.

All known methods and means for conducting and regulating secondary air may be relevant in this invention.

Supplying secondary air by various methods of conduction provide the advantages that an overpressure arises in the heat exposure zone. This means that possible wind and gusts will have more difficulty in blowing the heat away from the heat exposure area, and the apparatus may thus be used in more types of weather and thereby a greater part of the year, without any appreciably influence on the ability to combat the weeds thermally. This provides greater flexibility since it is now possible to place the work with weed control at more times during a season.

The means for heating by combustion of a combustible gas or liquid are disposed in a heating area so that the flame of the combustion does not reach down into the heat exposure area. Direct flame action on weeds and ground is avoided thereby, and ignition of the vegetation during dry spells may thus be prevented. The risk of fire is considerably reduced, and the apparatus may thus be applied for a greater part of the year without risking fire. This provides greater flexibility since it is now possible to place the work with weed control at more times during a season.

The means for heating may connected with a thermostat with associated temperature sensor, where the temperature sensor is preferably disposed in the heat exposure area. Thereby is achieved the possibility of regulating the heat supply, or even stop the supply of heat, for a shorter or longer period of time, only to start the heat supply again when a given minimum temperature is reached. The energy and the resources to be used for the thermal weed control are thereby saved, thus increasing profitability compared with existing weed control methods.

By a thermal weed control apparatus where heating is effected via combustion of a combustible gas or liquid, the combustion is to be stopped by shutting off the supply of combustible liquid or gas. The combustion is to be initiated by e.g. an electric ignition device or alternatively an ignition flame that possibly could be burning the same combustible gas or liquid otherwise used in the combustion.
All prior art methods for temperature sensing and thermostatic control as well as switching off the heating means may be applied to the present invention, and the described embodiments are thus not limiting with respect to the invention.

The weed plants often have a rough surface with air pockets containing still air which acts as insulation during the heat exposure. It is possible to vibrate the weed plant before the heat exposure in order to get the air out of the air pockets and provide access for the heated air to the cells of the weed plant in the heat exposure area. The time interval in which the weed plant is to be in the heat exposure area may thereby be reduced from, for example, 1 second to about 0.3 second. By enhancing the sensitivity of the weed plant to the heat exposure in various ways, the speed at which the area is treated may be increased with consequently enhanced efficiency of the thermal weed control.

Air molecules situated close to the surface of a weed plant due to e.g. the coanda effect or the surface roughness of the plant may start moving or be displaced by liquid in order thereby to influence the sensitivity of the weed plant to the heat exposure. Among others, this may be effected by mechanical vibration, ultrasound, electromagnetic radiation or by displacing the insulating air layer by a substance or a liquid which is more heat conducting than the air.

By mechanical vibration, the insulating air molecules may e.g. be brought to move by means of suspended chains or fixed downwards projecting parts in the heat exposure area, and where these fixed or movable downwardly projecting parts furthermore will be heated during the use of the apparatus and thereby contribute to direct heat conduction to the weed plant. The air molecules may also be excited by rotating rollers which possibly have various plant moving elements mounted thereon.

If it is desired to influence the sensitivity of the weed plants to the heat exposure, ultrasound or electromagnetic radiation, such as microwaves or infrared light, may be used alternatively. The radiation or sound emitter is fitted on the weed control apparatus and is set so that the.weed plant is vibrated or influenced at the instant it is exposed to heat.

By a substantial heating of the heat exposure area, the screen parts facing the area will be able to emit heat radiation, also called infrared radiation. This infrared radiation interacts with the action of the hot air in the heat exposure area in order to achieve the desired thermal action on the weed.

Steam under pressure may possibly be fed to the weed plant, whereby the water molecules penetrate thoroughly down into the surface of the plant, constituting a heat conductive medium between the cells of the weed plant and the hot air in the heat exposure area.

When the sensitivity of the weed plant to heat exposure is enhanced by the above described methods or other methods, it is possible to reduce the length of the heat exposure area in the driving direction, thereby reducing weight and improving manoeuvrability of the weed control apparatus.

It is also possible to use the weed control apparatus, irrespectively whether it is oriented along or transversely to the driving direction. A rectangular module can be used for treating rows when oriented along the driving direction, or area treatment when oriented transversely to the driving direction.

The supply of secondary air may advantageously be regulated, for example according to wind conditions or the amount and nature of the weed. Thereby is achieved that only the required overpressure is produced in the heat exposure area, so that in windy weather wind action on the heat exposure area is avoided, and by calm there will not be so much overpressure that the heat is blown out of the heat exposure area by excessive supply of secondary air.

By controlling a large amount of weed of a nature that tends to keep still air around the weed; it may, however, be advantageous to have a large overpressure in the heat exposure area in order thereby to get the hot air distributed thoroughly enough down into the weed mass. Regulation due to the amount and nature of the weed is therefore an advantage.

The burner nozzle or nozzles may advantageously be of the elongated type. By experience, the noise level of combustion by an elongated nozzle is lower than the noise level of combustion by a round nozzle. A reduced noise load is to be preferred with regard to the persons performing the weed control as well as the use of the apparatus in areas and at times where much noise is unwanted.

Irrespective of the technical embodiment, the weed control apparatuses described here can be designed as modules, as a modular structure enables the apparatuses to be used for weed control between plant rows and on the entire surface of the area as well. It is thus possible with a basic module having a width that fits to a preferred width of crop rows. The basic modules may be combined so as to be disposed closely when weed control is to be performed on whole surfaces, or with spacing when performing weed control between rows of crops. By weed control between rows of crops, means may be added for guiding according to the rows without damaging the crops in the rows.

By assembling several modules of weed control apparatuses on a vehicle, the supply of resources, such as the gas supply, may possibly be provided by a central container where gas hoses are run to each single module while observing safety conditions.

### Description of the Drawing

The invention is described in more detail with reference to the drawing, where:
- FIG. 1: shows a weed control apparatus 1, as seen from the side;
- FIG. 2: shows a longitudinal sectional view of a weed control apparatus 1.

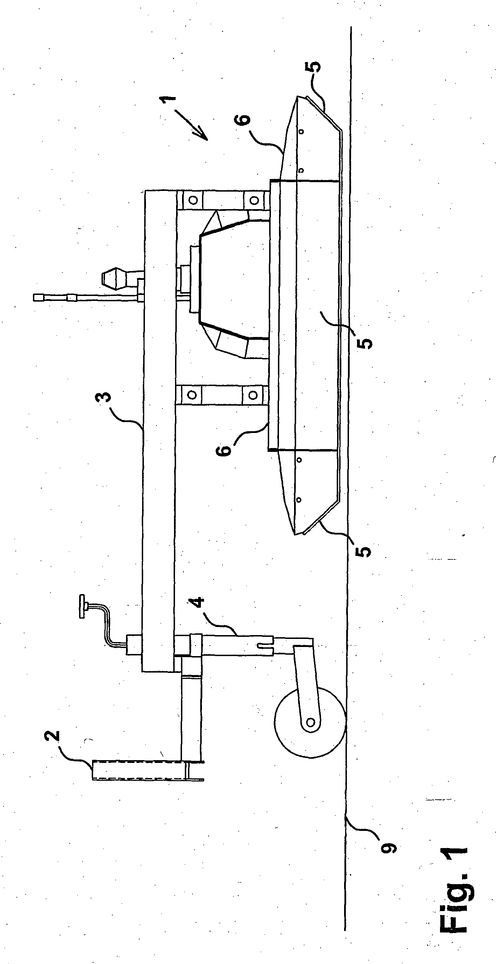

Fig. 1 shows a weed control apparatus 1 as seen from the side, where in this embodiment there are means for coupling 2 to a vehicle, such as a tractor. The coupling means 2 are connected with the weed control apparatus 1 via a suspension boom 3 which is provided with means for support wheels 4 for use when coupling the weed control apparatus 1 on and off. The weed control apparatus 1 is of the type with a screen towards the sides 5 and upwards 6.

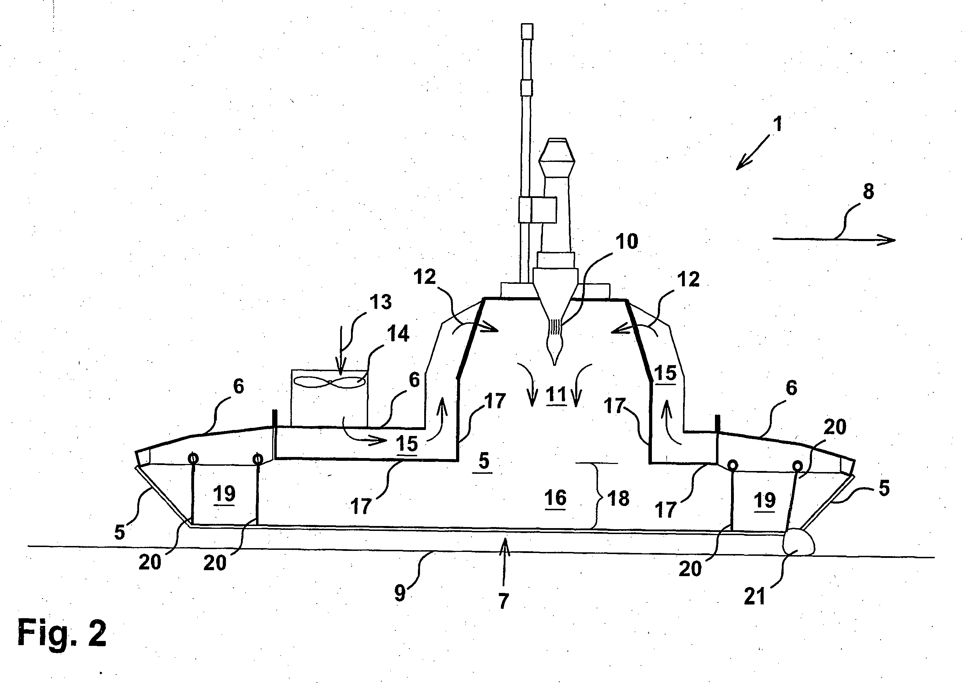

On Fig. 2 appears a longitudinal section of a weed control apparatus 1 with a area 7 which is delimited from the surroundings by a screen towards the sides 5 and upwards 6 and intended for moving in a direction 8 across a surface 9. The weed control apparatus 1 is provided with means for heating 10 disposed in a heating area 11 to which secondary air 12 is supplied, where the air 13 from outside is conducted to a preheating area 15 by one or more ventilators 14 and is preheated before being introduced to the heating area 11. The preheating area 15 includes one or more ducts which preferably are only separated from the heat exposure area 16 by a heat conducting material, e.g. an iron plate 17. The heat exposure area 16 is here defined with a height 18, as the heat exposure area 16, however, is not substantially delimited in relation to the heating area 11. The heat exposure area 16 is screened off to the front and to the rear in the direction of movement 8 by a lock 19, each consisting of two sets of pivotable flaps on row 20, so that the weed control apparatus 1 may pass over minor obstacles 21 without drawing these with it in the direction of movement 8.

## Claims

1. A weed control apparatus (1) intended for thermal weed control and provided with heating means (10) in a heating area (11), the heating means (10) comprising a burner nozzle for combustion of a combustible gas or liquid (10) by a flame; wherein the heating area receives primary air for the combustion; wherein a heat exposure area (16) is provided below the heating area (11), so that the flame of the combustion does not reach down into the heat exposure area (16), which is substantially separated from the surroundings by a screen at the sides (5) and upwards (6); wherein the apparatus (1) is configured for moving in a direction (8) across a surface (9); wherein the apparatus comprises a preheating area (15) for preheating secondary air (12) by conducting it through said preheating area (15), where the preheating area (15) includes one or more ducts which are only separated from the heat exposure area (16) by a heat conducting material, **characterised in that** the apparatus is configured for introducing the preheated secondary air into the heating area (11) for enhancing the combustion process.

2. Weed control apparatus (1) according to claim 1, **characterised in that** the supplied secondary air (12) is atmospheric air.

3. Weed control apparatus (1) according to any of claims 1-2, **characterised in that** the apparatus includes means for feeding particles to the supplied secondary air (12) with a particle size that may be carried with the air flow in the secondary air (12), where the particles are solid or liquid.

4. Weed control apparatus (1) according to any of claims 1-3, **characterised in that** the supply of secondary air (12) occurs via at least one ventilator (13).

5. Weed control apparatus (1) according to claim 4, **characterised in that** the at least one ventilator (13) is driven electrically or mechanically, including pneumatically or hydraulically.

6. Weed control apparatus (1) according to any of claims 1-3, **characterised in that** the supply of secondary air (12) is effected via supply of pressurised air from a compressor or a pressurised air container, including by injection of pressurised air by venturi action.

7. Weed control apparatus (1) according to any of claims 1-6, **characterised in that** the apparatus comprises ducts configured for conducting even amounts of secondary air to discharge apertures which are evenly distributed around the burner nozzle.

8. Weed control apparatus (1) according to any of claims 1-7, **characterised in that** the means for heating are connected with a thermostat with associated temperature sensor, where the temperature sensor is disposed in the heat exposure area (16).

9. A method for thermal weed control, wherein a weed control apparatus (1) is provided with heating means (10) in a heating area (11), the heating means (10) comprising a burner nozzle combusting a combustible gas or liquid (10), wherein a heat exposure area (16) is provided below the heating area (11), so that the flame of the combustion does not reach down into the heat exposure area (16) which is substantially separated from the surroundings by a screen at the sides (5) and upwards (6), wherein the apparatus is moved in a direction (8) across a surface (9), wherein secondary air (12) is preheated by conducting it through a preheating area (15), where the preheating area (15) includes one or more ducts which are only separated from the heat exposure area (16) by a heat conducting material, **characterised in that** the method comprises introducing the secondary air into the heating are (11) for enhancing the combustion process.

10. Method for thermal weed control according to claim 9, **characterised in that** air molecules situated close to the surface of a weed plant due to the coanda effect or the surface roughness of the plant start moving or are displaced by liquid.

11. Method for thermal weed control according to any of claims 9-10, **characterised in that** the supply of secondary air (12) is regulated according to wind conditions or the amount and nature of the weed.

12. Method for thermal weed control according to any of claims 9-11, **characterised in that** the supplied secondary air (12) contains combustible particles.

13. Method for thermal weed control according to claim 12, **characterised in that** the combustible particles are coal dust, sawdust or atomised rape oil.

## Patentansprüche

1. Unkrautbekämpfungsgerät (1) zur thermischen Unkrautbekämpfung, das Heizvorrichtungen (10) in einem Aufheizungsbereich (11) aufweist, wobei die Heizvorrichtungen (10) eine Brennerdüse zur Verbrennung von brennbarem Gas oder Flüssigkeit (10) mittels einer Flamme umfassen; wobei der Aufheizungsbereich Primärluft für die Verbrennung aufnimmt, wobei ein Beheizungsbereich (16) unterhalb dem Aufheizungsbereich (11) angeordnet ist, so dass die Verbrennungsflamme bis in den Beheizungsbereich (16), der durch einen Schirm seitwärts (5) und aufwärts (6) im wesentlichen von den Umgebungen getrennt ist, nicht reicht; wobei das Gerät (1) für Bewegung in einer Richtung (8) quer über eine Oberfläche (9) ausgelegt ist; wobei das Gerät einen Vorheizungsbereich (15) für die Vorheizung von Sekundärluft (12) durch das Fördern davon durch den erwähnten Vorheizungsbereich (15) hindurch aufweist, wobei der Vorheizungsbereich (15) einen oder mehrere Kanäle umfasst, die nur von dem Beheizungsbereich (16) mittels eines wärmeleitenden Material getrennt sind, **dadurch gekennzeichnet, dass** das Gerät für die Zufuhr der vorbeheitzten Sekundärluft in den Aufheizungsbereich (11) für die Unterstützung des Verbrennungsprozesses ausgelegt ist.

2. Unkrautbekämpfungsgerät (1) nach Anspruch 1, **dadurch gekennzeichnet, dass** die versorgte Sekundärluft (12) atmosphärische Luft ist.

3. Unkrautbekämpfungsgerät (1) nach irgendeinem der Ansprüche 1-2, **dadurch gekennzeichnet, dass** das Gerät Mittel aufweist zum Einspeisen in die versorgte Sekundärluft (12) von Partikeln mit einer solchen Partikelgröße, dass die Partikel mit dem Luftstrom in der Sekundärluft (12) tragbar sind, wobei die Partikel fest oder flüssig sind.

4. Unkrautbekämpfungsgerät (1) nach irgendeinem der Ansprüche 1-3, **dadurch gekennzeichnet, dass** die Versorgung von Sekundärluft (12) durch wenigstens einen Ventilator (13) erfolgt.

5. Unkrautbekämpfungsgerät (1) nach Anspruch 4, **dadurch gekennzeichnet, dass** der wenigstens eine Ventilator (13) elektrisch oder mechanisch, darunter auch pneumatisch oder hydraulisch, getrieben wird.

6. Unkrautbekämpfungsgerät (1) nach irgendeinem der Ansprüche 1-3, **dadurch gekennzeichnet, dass** die Sekundärluft (12) durch Versorgung von Druckluft von einem Kompressor oder Druckluftspeicher, darunter durch Einblasen von Druckluft durch Venturiwirkung, versorgt wird.

7. Unkrautbekämpfungsgerät (1) nach irgendeinem der Ansprüche 1-6, **dadurch gekennzeichnet, dass** das Gerät Kanäle aufweist, die für das Fördern gleicher Sekundärluftmengen auf gleichmässig um die Brennerdüse herum verteilt angeordnete Auslassöffnungen zu ausgelegt sind.

8. Unkrautbekämpfungsgerät (1) nach irgendeinem der Ansprüche 1-7, **dadurch gekennzeichnet, dass** die Heizvorrichtungen mit einem Temperaturregler mit zugeordnetem Temperaturfühler verbunden sind, wobei der Temperaturfühler in dem Beheizungsbereich (16) angeordnet ist.

9. Verfahren zur thermischen Unkrautbekämpfung, wobei das Unkrautbekämpfungsgerät (1) Heizvorrichtungen (10) in einem Aufheizungsbereich (11) aufweist, wobei die Heizvorrichtungen (10) jeweils eine Brennerdüse aufweisen, die einen brennbaren Gas oder Flüssigkeit (10) verbrennt, wobei der Beheizungsbereich (16) unterhalb dem Aufheizungsbereich (11) angeordnet ist, so dass die Verbrennungsflamme bis in den durch einen Schirm seitwärts (5) und aufwärts (6) im wesentlichen von den Umgebungen getrennten Beheizungsbereich (16) nicht reicht, wobei das Gerät in einer Richtung (8) quer über eine Oberfläche (9) bewegt wird, wobei Sekundärluft (12) durch Fördern davon durch einen Vorheizungsbereich (15) hindurch vorbeheitzt wird, wobei der Vorheizungsbereich (15) einen oder mehrere Kanäle umfasst, die nur mittels eines wärmeleitenden Materials von dem Beheizungsbereich (16) getrennt sind, **dadurch gekennzeichnet, dass** das Verfahren die Versorgung der Sekundärluft in den Aufheizungsbereich (11) zum Fördern des Verbrennungsprozesses umfasst.

10. Verfahren zur thermischen Unkrautbekämpfung nach Anspruch 9, **dadurch gekennzeichnet, dass** dicht an der Oberfläche einer Unkrautpflanze befindliche Luftmoleküle wegen des Coanda-Effekts oder der Oberflächenrauheit der Pflanze eine Bewegung anfangen oder mittels der Flüssigkeit versetzt werden.

11. Verfahren zur thermischen Unkrautbekämpfung nach irgendeinem der Ansprüche 9-10, **dadurch gekennzeichnet, dass** die Sekundärluftversorgung (12) je nach den Windverhältnissen oder der Menge und Natur des Unkrauts geregelt wird.

12. Verfahren zur thermischen Unkrautbekämpfung nach irgendeinem der Ansprüche 9-11, **dadurch gekennzeichnet, dass** die versorgte Sekundärluft (12) brennbare Partikel enthält.

13. Verfahren zur thermische Unkrautbekämpfung nach Anspruch 12, **dadurch gekennzeichnet, dass** die brennbaren Partikel Kohlenstaub, Sägemehl oder zerstäubtes Rapsöl sind.

## Revendications

1. Appareil de désherbage (1) destiné au désherbage thermique et pourvu de moyens de chauffage (10) dans une zone de chauffage (11), les moyens de chauffage (10) comprenant une buse de brûleur pour combustion d'un gaz ou un liquide combustibles (10) au moyen d'une flamme ; dans lequel la zone de chauffage reçoit de l'air primaire pour la combustion ; dans lequel une zone exposée d'une chaleur (16) est prévue au-dessous de la zone de chauffage (11) afin que la flamme de combustion ne touche pas la zone exposée d'une chaleur (16) qui est essentiellement séparée des alentours par un écran aux côtés (5) et vers le haut (6) ; dans lequel l'appareil (1) est configuré pour se déplacer dans une direction (8) à travers d'une surface (9) ; dans lequel l'appareil comprend une zone de préchauffage (15) pour préchauffer l'air secondaire (12) en le conduisant à travers ladite zone de préchauffage (15), la zone de préchauffage (15) comprend un ou plusieurs conduits qui sont seulement séparés de la zone exposée d'une chaleur (16) par un matériau conducteur de chaleur, **caractérisé en ce que** l'appareil est configuré pour introduire l'air secondaire préchauffé dans la zone de chauffage (11) en vue d'améliorer le processus de combustion.

2. Appareil de désherbage (1) selon la revendication 1, **caractérisé en ce que** l'air secondaire fourni (12) constitue de l'air atmosphérique.

3. Appareil de désherbage (1) selon l'une quelconque des revendications 1 à 2, **caractérisé en ce que** l'appareil comprend des moyens pour amener des particules vers l'air secondaire fourni (12), les particules ayant une dimension de particule qui peut être transportée avec le flux d'air dans l'air secondaire (12), les particules sont des particules solides ou liquides.

4. Appareil de désherbage (1) selon l'une quelconque des revendications 1 à 3, **caractérisé en ce que** l'alimentation en air secondaire (12) est fournie par au moins un ventilateur (13).

5. Appareil de désherbage (1) selon la revendication 4, **caractérisé en ce qu'au** moins un ventilateur (13) est entraîné électriquement ou mécaniquement, y compris pneumatiquement ou hydrauliquement.

6. Appareil de désherbage (1) selon l'une quelconque des revendications 1 à 3, **caractérisé en ce que** l'alimentation en air secondaire (12) s'effectue par une alimentation en air comprimé à partir d'un compresseur ou un réservoir de l'air comprimé, y compris par une injection d'air comprimé par un effet venturi.

7. Appareil de désherbage (1) selon l'une quelconque des revendications 1 à 6, **caractérisé en ce que** l'appareil comprend des conduits configurés pour conduire des même quantités d'air secondaire à des orifices de décharge distribués de façon régulière autour de la buse de brûleur.

8. Appareil de désherbage (1) selon l'une quelconque des revendications 1 à 7, **caractérisé en ce que** les moyens de chauffage sont connectés à un thermostat associé à un capteur de température, le capteur de température est disposé dans la zone exposée d'une chaleur (16).

9. Procédé pour le désherbage thermique, dans lequel un appareil de désherbage (1) comprend des moyens de chauffage (10) dans une zone de chauffage (11), les moyens de chauffage (10) comprennent une buse de brûleur brûlant un gaz ou un liquide combustibles (10), dans lequel une zone exposée d'une chaleur (16) est prévue au-dessous de la zone de chauffage (11) afin que la flamme de combustion ne touche pas la zone exposée d'une chaleur (16) qui est essentiellement séparée des alentours par un écran aux côtés (5) et vers le haut (6) ; dans lequel l'appareil (1) se déplace dans une direction (8) à travers d'une surface (9) ; dans lequel l'air secondaire (12) est préchauffé en le conduisant à travers une zone de préchauffage (15), la zone de préchauffage (15) comprend un ou plusieurs conduits seulement séparés de la zone exposée d'une chaleur (16) par un matériau conducteur de chaleur, **caractérisé en ce que** le procédé comprend l'introduction de l'air secondaire dans la zone de chauffage (11) en vue d'améliorer le processus de combustion.

10. Procédé pour le désherbage thermique selon la revendication 9, **caractérisé en ce que** les molécules d'air situées près de la surface d'une mauvaise herbe commencent à se déplacer ou sont déplacées par un liquide grâce à l'effet Coanda ou les rugosités de surface de la plante.

11. Procédé pour le désherbage thermique selon l'une quelconque des revendications 9 à 10, **caratérisé en ce que** l'alimentation en air secondaire (12) est régulée selon les conditions de vent ou la quantité et la nature de mauvaises herbes.

12. Procédé pour le désherbage thermique selon l'une quelconque des revendications 9 à 11, **catractérisé en ce que** l'air secondaire fourni (12) comprend des particules combustibles.

13. Procédé pour le désherbage thermique selon la revendication 12, **caractérisé en ce que** les particules combustibles constituent de la poussière de charbon, de la sciure de bois ou de l'huile de colza pulvérisée.
